Europäisches Patentamt

(19) European Patent Office

Office européen des brevets

(11) Publication number: **0 060 004**
**B1**

(12) **EUROPEAN PATENT SPECIFICATION**

(45) Date of publication of patent specification: **27.12.84**　　(51) Int. Cl.³: **A 22 B 3/06**

(21) Application number: **82200256.4**

(22) Date of filing: **01.03.82**

(54) **Stunning installation for slaughter cattle.**

(30) Priority: **03.03.81 NL 8101024**

(43) Date of publication of application:
**15.09.82 Bulletin 82/37**

(45) Publication of the grant of the patent:
**27.12.84 Bulletin 84/52**

(84) Designated Contracting States:
**AT BE CH DE FR GB IT LI LU NL SE**

(56) References cited:
**DD-A- 89 062**
**GB-A- 406 916**
**NL-A-6 702 456**
**NL-A-6 805 325**
**NL-A-7 705 519**
**NL-A-7 903 681**
**US-A-3 167 809**

(73) Proprietor: **MACHINEFABRIEK G.J. NIJHUIS B.V.**
**Parallelweg 4 Postbus 102**
**NL-7100 AC Winterswijk (NL)**

(72) Inventor: **Nijhuis, Gerrit Jan**
**Rusthuisstraat 10**
**NL-7101 JH Winterswijk (NL)**

(74) Representative: **van der Beek, George Frans et al**
**Nederlandsch Octrooibureau Johan de Wittlaan 15 P.O. Box 29720**
**NL-2502 LS 's-Gravenhage (NL)**

Courier Press, Leamington Spa, England.

# Description

The invention relates to a stunning installation for slaughter-cattle, more in particular for pigs, comprising two parallel extending endless conveyor belts of which the opposed conveying surfaces define a V-shaped passage in which electrodes can be moved until they contact the animal to be stunned and can be retracted by means of a cylinder in response to a signal initiated by the animal itself.

Such a stunning installation is for instance known from the Eastern German Patent 89062 respectively from the Dutch laid open patent application 7705519.

In the first mentioned known installation the animal, which is moved by a transport system, interrupts a light beam initiating the signal for causing descending of the electrodes by means of a cylinder installed on a carriage. This known installation works continuously and automatically but has the disadvantage that the electrodes, which move along a fixed path do not always touch the head of the animal in the correct way, so that a quick stunning is not always assured. If the stunning does not take place fast and with the correct voltage, muscle contraction can appear leading to breakage of bones and internal bleedings thereby reducing the quality of the meat.

In the second known stunning installation the animals to be stunned make contact with the electrodes themselves and a better result is obtained, which results can be improved further to reach a very high stunning production without any decrease in meat quality by using further improvements, such as disclosed among others in the laid open Dutch application 7904935. With the latter installation a high production can be reached fully automatically.

Small slaughter-houses with a low production, respectively slaughter-houses with insufficient room for a stunning line of adequate length and so having for instance two conveyor systems following each other as disclosed in the Dutch application 7705519, are in need of a stunning installation which attains in a simple way the advantages of the automatical stunning and which does not have the disadvantages of the manual stunning process as known from the U.S. Patent 2,185,949. These disadvantages are that the person, who has to carry out this stunning process, is suffering from "stress" and also because of this "stress" respectively because of tiredness, the electrodes are place inadequately exact or correct. This leads to the above mentioned disadvantages.

The aimed object is according to the invention attained by positioning sensing electrodes in the V-shaped passage, which electrodes are incorporated in the driving circuit of the conveyor system such, that at the detection of an animal by means of a low sensing voltage on the sensing electrodes the driving of the conveyor system stops, whereafter the sensing voltage disappears, and that the control system of the cylinder moving said stunning electrodes comprises a push button, actuation of which causes the said stunning electrodes to descend.

The invention therefore leaves the principle of a fully automatic stunning installation and provides a semi automatic system in which first of all the movement of the animal is stopped as soon as it is detected by means of the sensing current, that the animal is delivered to the desired place, whereafter the animal will settle quietly as result of the disappearing sensing voltage, whereafter the operator, not manually but by activating said push button, causes the operating cylinder to move the electrodes towards the head of the animal. Said electrode can be a known bifurcated electrode shooting into the neck of the animal or preferably engaging the animal transversely across the snout.

The stunning installation according to the invention does not have the high production rate of the fully automatic installation according to the laid open Dutch application 7904935. However, the proposed installation is significantly simplified avoiding thereby the drawbacks associated with the manual stunning process, whereas the percentage of animals showing a decrease in meat quality as result of said stunning, is acceptably low. The operator is able to determine, after the conveyor system has come to a stand still, if the head of the animal is sufficiently at rest and is positioned in the line of movement of the electrodes, whereby the operator eventually can interfere by changing the direction in which the electrodes are moving. The operator is not or is suffering considerably less from "stress", because he himself is not contacting the animal with the electrodes, but takes care thereof by activating a push button and using auxiliary means. Furthermore a saving in personnel is possible with this installation. The driving, stunning, chain lifting and knife stubbing of the cattle can be done by a smaller number of persons, because the stunning process only requires the actuation of a push button. The conveyor belts can be restarted by pressing a push button or can restart automatically when the stunning voltage disappears.

Preferably the sensing electrodes are embodied as chains and said sensing electrodes and the stunning electrodes are fixed to a frame, which is adjustable in height as adaption to animals having different sizes. The chains are a simple means for applying a sensing voltage such that a sensing current can run from one side of the snout to the other side to determine in a known way if the sensed resistance corresponds to that of a pig or an other animal. The chains preferably have links which are pivotable around parallel extending axes. Such chains are stiff in the direction of said axes and will not touch each other when they are suspended with said axes transverse to the conveying direction.

Preferably said frame carries at the discharge end of the conveying system a passage closing plate, pivotably connected to said system. Said plate can be coupled to means interrupting the stunning system when said plate is moving. Manual assistance can be necessary to move a stunned animal out of the installation and in that case protection is needed.

Preferably all parts, i.e. said plate, the sensing electrodes and the stunning electrodes are positioned near the exit of the conveying system, so that the stunned animal almost falls out of the installation.

The invention will now be explained in more detail with reference to the drawings.

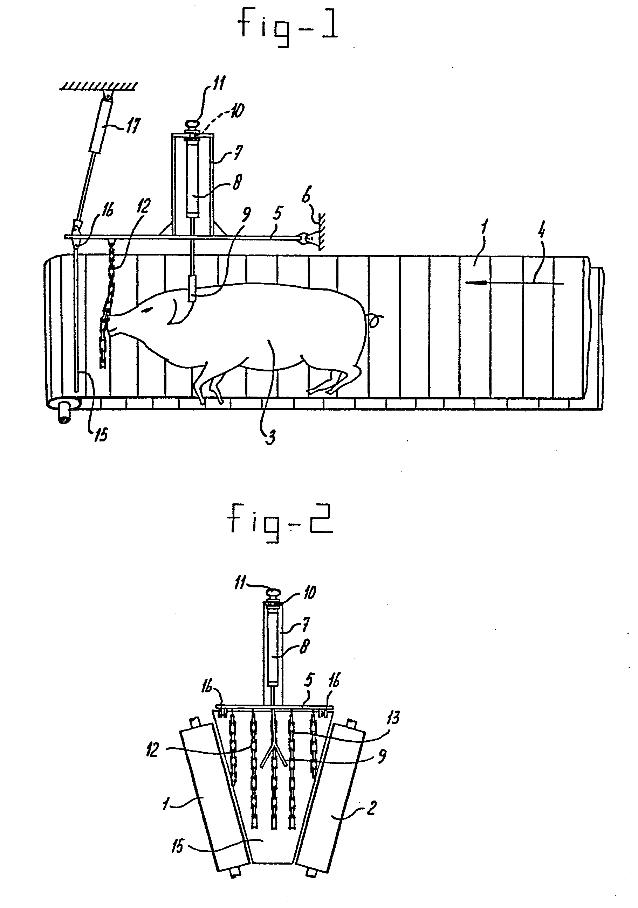

Fig. 1 shows a longitudinal cross section through the installation according to the invention.

Fig. 2 shows a rear view, i.e. a view in the direction of movement of the conveyor system.

Fig. 3 shows a view corresponding to that of Fig. 1 of another embodiment.

The installation, shown in the figures, includes two endless conveyor belts 1 and 2, comprising plates which are pivotably connected to each other.

The animal 3 to be stunned is moved between said conveyor systems in a known way in the direction of the arrow 4.

Above the conveyor systems 1 and 2 a frame is installed pivotably connected to a not shown support.

Said frame 5 carries a support 7 for the operating cylinder 8 of a V-shaped stunning electrode system 9. Said operating cylinder is guided by means of a slideable bush 10 comprising an operating knob 11 above said support 7 to move said bush to and fro. Because of said movement it is possible to determine the direction in which the cylinder 8 will move the electrodes 9.

The frame 5 further carries sensing electrodes 12 and 13 in the form of chains, which are insulated from each other and cannot touch each other. If the animal touches two of these chains, a sensing current can run through the head of the animal and that results in a signal for bringing the conveyor belts 1 and 2 to a stand still and for switching off said sensing current.

The operator is able, eventually after directioning the electrodes 9, to activate said cylinder 8 by operating a push button, so that the electrodes will be moved downwards until they reach the head of the animal, which animal is stunned by a stunning voltage running between said V-shaped electrode 9 and the chains 12.

The retraction of the electrodes can be made dependent onto the releasing of said push button or can be determined by a timing mechanism.

The frame 5 furthermore carries a triangular plate 15 of which the upper edge is pivotably connected to said frame at 16. If the conveyor system is set in motion again, the animal can simply pass along said sensing electrodes and underneath said plate.

If assistance from operating personnel is needed for removing the animal from the installation, then said plate has to be moved out of the way. To avoid that the operating personnel comes in contact with the stunning voltage, the stunning circuit comprises a switch coupled to said plate and activated by the movement of said plate out of the vertical position, so that the stunning circuit automatically is disconnected.

The frame 5 can be adjustable in height direction, for instance by means of a cylinder 17 as adaption to the size of the animal.

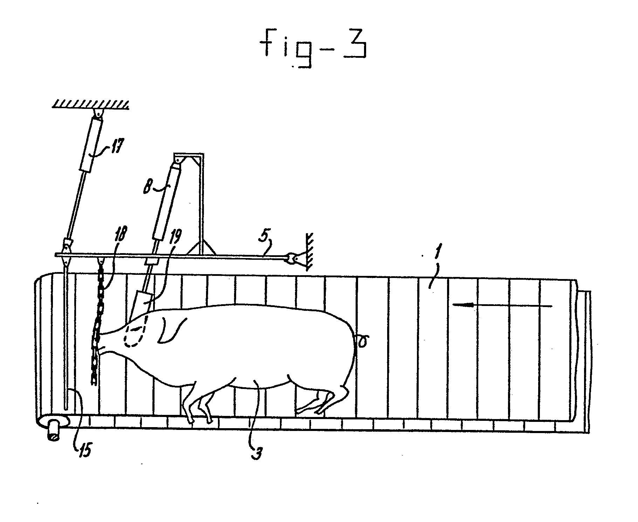

Fig. 3 shows an embodiment in which the chains 18 are used only for contacting the sensing currents and for realizing the further functions of the sensing voltage.

The stunning electrodes comprise two plates 19 insulated from each other, which plates are in form adapted to the form of the snout and can be applied to both sides of said snout.

**Claims**

1. Stunning installation for slaughter cattle, in particular for pigs, comprising two parallel extending endless conveyor belts (1, 2) of which the two opposed conveying surfaces define a V-shaped passage in which electrodes (9, 19) can move until they contact the animal to be stunned and can be retracted by means of a cylinder (8) in response to a signal initiated by the animal itself, characterized in that near the end of the conveyor system (1, 2) sensing electrodes (12, 13) are positioned in the V-shaped passage, which are incorporated in the driving circuit of the conveyor system (1, 2) such, that at the detection of an animal (3) by means of a low sensing voltage on the sensing electrodes (12, 13, 18) the driving of the conveyor system (1, 2) stops whereafter the sensing voltage disappears and that the control system of the cylinders (8) moving said stunning electrodes (9, 19) comprises a push button, actuation of which causes the said stunning electrodes (9, 19) to descend.

2. Stunning installation according to claim 1, characterized in that the sensing electrodes are chains (12, 13, 18).

3. Stunning installation according to claim 1 or 2, characterized in that the sensing electrodes (12, 13) and the stunning electrodes (9, 19) are fixed to a frame (5), which is adjustable in height.

4. Stunning installation according to claim 3, characterized in that said frame (5) carries at the discharge end of the conveying system a passage closing plate (15) pivotably connected to said system.

5. Stunning installation according to claim 4, characterized in that means are provided to interrupt the stunning system when said plate (15) is moved.

6. Stunning installation according to one or more of the preceding claims, characterized in that the sensing electrodes (12, 13, 18) and the stunning electrodes (9, 19) are positioned near the exit of the conveyor system (1, 2).

7. Stunning installation according to one or more of the preceding claims, characterized in that the stunning electrodes (9, 19) are installed adjustable in a longitudinal direction of the installation.

8. Stunning installation according to one or more of the preceding claims, characterized in that the stunning electrodes (19) comprise two plates (19) which are insulated from each other and which can be applied to both sides of the snout of the animal (3).

## Revendications

1. Installation d'assommage pour animaux de boucherie, en particulier pour porcs, comprenant deux courroies transporteuses sans fin s'étendant parallèlement (1, 2) dont les deux surfaces de transport opposées définissent un passage en V dans lequel des électrodes (9, 19) peuvent se déplacer jusqu'à toucher l'animal à abattre et peuvent être rétractées au moyen d'un vérin (8) en réponse à un signal amorcé par l'animal lui-même, caractérisé en ce que, près de l'extrémité du système transporteur (1, 2), dans le passage en V, sont placées des électrodes de détection (12, 13) qui sont incorporées au circuit d'entraînement du système transporteur (1, 2) de telle sorte que, lors de la détection d'un animal (3) au moyen d'une tension de détection faible présente sur les électrodes de détection (12, 13, 18) l'entraînement du système transporteur (1, 2) s'arrête après quoi la tension de détection disparaît et en ce que le système de commande des vérins (8) déplaçant lesdites électrodes d'assommage (9, 19) comprend un bouton-poussoir, dont la manoeuvre provoque la descente desdites électrodes d'assommage.

2. Installation d'assommage selon la revendication 1, caractérisée en ce que les électrodes de détection sont des chaînes (12, 13, 18).

3. Installation d'assommage selon la revendication 1 ou 2, caractérisée en ce que les électrodes de détection (12, 13) et les électrodes d'assommage (9, 19) sont fixées sur un bâti (5), qui est réglable en hauteur.

4. Installation d'assommage selon la revendication 3, caractérisée en ce que ledit bâti (5) porte à l'extrémité de déchargement du système de transport une plaque de fermeture de passage (15) articulée sur ledit système.

5. Installation d'assommage selon la revendication 4, caractérisée en ce que des moyens sont prévus pour interrompre le système d'assommage quand ladite plaque (15) est déplacée.

6. Installation d'assommage selon les revendications précédentes, caractérisée en ce que les électrodes de détection (12, 13, 18) et les électrodes d'assommage (9, 19) sont placées prés de la sortie du système transporteur (1, 2).

7. Installation d'assommage selon les revendications précédentes, caractérisée en ce que les électrodes d'assommage (9, 19) sont montées avec possibilité de réglage suivant la longuer de l'installation.

8. Installation d'assommage suivant les revendications précédentes, caractérisée en ce que les électrodes d'assommage (19) sont constituées par deux plaques (19) qui sont isolées l'une de l'autre et qui peuvent être appliquées de part et d'autre du museau de l'animal (3).

## Patentansprüche

1. Betäubungsvorrichtung für Schlachtvieh, insbesondere für Schweine, bestehend aus zwei parallel verlaufenden Endlosförderbändern (1, 2), deren beide gegenüberliegende Förderflächen einen V-förmigen Durchlaß bilden, in welchem sich Elektroden (9, 19) bis zur Berührung mit dem zu schlachtenden Tier bewegen können, und ansprechend auf ein vom Tier selbst ausgelöstes Signal mit Hilfe eines Zylinders (8) zurückgezogen werden können, dadurch gekennzeichnet, daß in der Nähe des Endes der Förderanlage (1, 2) im V-förmigen Durchlaß Fühlelektroden (12, 13) angeordnet sind, die im Antriebskreis der Förderanlage (1, 2) derart ausgebildet sind, daß bei der Erfassung eines Tieres (3) mittels einer niedrigen Führspannung an den Fühlelektroden (12, 13, 18) der Antrieb der Förderanlage stoppt, wonach die Fühlspannung verschwindet, und daß die die Betäubungselektroden (9, 19) bewegende Steueranlage des Zylinders (8) einen Druckknopf umfaßt, dessen Betätigung die Betäubungselektroden (9, 19) zum Herabsinken veranlaßt.

2. Betäubungsvorrichtung nach Anspruch 1, dadurch gekennzeichnet, daß die Fühlelektroden aus Ketten (12, 13, 18) bestehen.

3. Betäubungsvorrichtung nach Anspruch 1 oder 2, dadurch gekennzeichnet, daß die Fühlelektroden (12, 13) und die Betäubungselektroden (9, 19) an einem in der Höhe einstellbaren Rahmen (5) befestigt sind.

4. Betäubungsvorrichtung nach Anspruch 3, dadurch gekennzeichnet, daß der Rahmen (5) an Entladeende der Förderanlage eine schwenkbar mit dieser verbundene Durchlaßabschlußplatte (15) trägt.

5. Betäubungsvorrichtung nach Anspruch 4, dadurch gekennzeichnet, daß eine Einrichtung vorgesehen ist, die das Betäubungssystem unterbricht, sobald die Platte (15) bewegt wird.

6. Betäubungsvorrichtung nach einem oder mehreren der vorangehenden Ansprüche, dadurch gekennzeichnet, daß die Fühlelektroden (12, 13, 18) und die Betäubungselektroden (9, 19) in der Nähe des Ausgangs der Förderanlage (1, 2) angeordnet sind.

7. Betäubungsvorrichtung nach einem oder mehreren der vorangehenden Ansprüche, dadurch gekennzeichnet, daß die Betäubungselektroden (9, 19) in einer Längsrichtung der Anlage einstellbar angebracht sind.

8. Betäubungsvorrichtung nach einem oder mehreren der vorangehenden Ansprüche, dadurch gekennzeichnet, daß die Betäubungselektroden (19) zwei Platten (19) umfassen, die voneinander isoliert und beidseitig am Rüssel des Tieres (3) anlegbar sind.

# Fig-1

# Fig-2

# fig-3